# EUROPEAN PATENT SPECIFICATION

(11) **EP 1 638 388 B1**
(45) Date of publication and mention of the grant of the patent: **16.01.2008**
(21) Application number: 03816015.6
(22) Date of filing: 27.02.2003
(51) Int. Cl.: A01G 15/00, B64D 1/16

(54) **PROCESS AND EQUIPMENT TO UNLEASH RAIN PRECIPITATION FROM CONVECTIVE CLOUDS OF CUMULUS TYPE SPRAYING WATER DROPLETS OF CONTROLLED SIZE**
VERFAHREN UND EINRICHTUNG ZUM FREISETZEN VON REGENNIEDERSCHLAG AUS KONVEKTIONSWOLKEN DER KUMULUSART UNTER VERSPRÜHEN VON WASSERTROPFEN KONTROLLIERTER GRÖSSE
PROCEDE ET EQUIPEMENT POUR PROVOQUER UNE PRECIPITATION SOUS FORME DE PLUIE A PARTIR DE NUAGES DE CONVECTION DU TYPE CUMULUS PAR PULVERISATION DE GOUTTELETTES D'EAU D'UNE TAILLE CONTROLEE

(43) Date of publication of application: 29.03.2006
(73) Proprietor: Takeshi, Imai, CEP-07115-040 Guarulhos/SP (BR)
(72) Inventor: Takeshi, Imai, CEP-07115-040 Guarulhos/SP (BR)
(74) Representative: Negrini, Elena
(86) International application number: PCT/BR2003/000027
(87) International publication number: WO 2004/075630

(56) References cited:
- EP-A1- 0 292 932
- WO-A1-03/009671
- US-A- 2 242 705
- US-A- 5 357 865
- US-A- 6 003 782

## Description

The purpose of this invention patent is a process and equipment designed to artificially unlesh the rain precipitation from convective clouds of Cumulus type, by means of aplication of water into these clouds using a system that produces collecting water droplets of controlled size, using airplanes properly equipped with the equipment which are subject matter of this patent application, and which unleash rain with efficiency, productivity and at low cost.

The Cumulus clouds are responsible for 75 per cent of the rainfall in tropical climate areas and are also responsible for most of the rainfall in subtropical climate areas. However, researches show that most of the convective clouds do not precipitate. About 20% of these clouds are likely to turn into rain, mainly during the summer, while the remaining clouds either dissipate at the end of afternoon or are carried away by the winds (Kampe and Weickman 1957). Cloud fronts that come covering the sky are carried away without precipitation or with incomplete precipitation of small, localized and scattered rains. After this partial rain, the cloud remain visible and full of water. The lack of rains, with presence of clouds that either do not precipitate or precipitate in an incomplete fashion during the fewer rain periods, brings serious problems to the comunity.

The possibility of controlling the convective clouds with the proposed tecnology, causing rain precipitation by the integral convertion of the existing clouds into rain, over locations where rain is required, constitutes an important national and even worldwide value. There are multiple applications for this invention. New and valued applications are also possible, with great benefits for the people and the society.
1. Increase of the rainfall over eletric power plant dams and basins, for the production and distribution of more energy.
2. Increase in the amount of fresh water for human consuption, which is a very scarce resource all over the world.
3. Increase the production of food in agriculture, or to prevent losses during the draught season.
4. Clearing of polluted air over great metropolitan areas.

The unleashing of rains from clouds seeding is one of the most fascinating and also polemic subject matters in the climate modification researches. Since 1946, scientists have been able to record rain precipitation when it was demonstrated for the first time in the USA the possibility of a rain precipitation controlled by man in super frozen clouds, seeded with dry ice at -40°C (Schaefer and Langmuir). During the decades of 60 and 70 Americam Scientists (Grant /68), (Heymsfield /69), (Rhea /70), (Jiusto and Holroyd /70), (Campell /74), (Hobbs, Grant and Radke /73) and (Vardiman /74), and also Russian scientists achieved rain precipitation in cold clouds at temperature ranges from -21 °C to -6°C using silver iodine, which instantaneously vaporized produces large amounts of ice cristal nuclei, absorbing vaporized water vapor from the air, and them causing the rain.

In warm convective clouds (those without ice cristals), tests spraying water over the clouds using traditional spray nozles moved the clouds and caused rains to occur. However, the huge amount of water necessary to unleash the rain, made this process economically unviable, (J.S.Weisberg Meteorology, Rainmaking). In the search for lighter, less voluminous and highly hygroscopic materials for the seeding of clouds, Israeli and American scientists achieved important rain precipitation with micro droplets (10 to 40 microns) of salt saturated water solution (Gagin and Neumann Israel /74), (Elliot California /71), (Simpson /71), (Olsen /73), (Miller Dakota /74), (Simpson and Dennis /74), (Wooley /75), during the 70s. These pionner experiments were largely reapeated during the 70s and 80s by the CTA Centro Técnico Aeronáutico (Brazilian Aeronautical Technical Center), in the Modart Project in the Brazilian northeastern region and also in many countries worldwide. The results are sometimes positive, negative or inconclusive.

During an important Congress sponsered by the Americam Society of Meteorology whose subject was: **"Climate Modification: Where we are now and where should we be going?"** a group of the most important scientists (I.R.Sax NOAA National Hurricane and Experimental Meteorology Lab, - FLA, S.A. Changnon Illinois State Water Survey, I.O. Grant Colorado State University, W.F.Hischfeld McGill University Montreal, P.V. Hobbs University of Washington, A.M. Kahan Bureau of Engineering and Research Center Denver, (J.Simpson University of Virginia), concluded: *"...After one quarter of century of efforts, we have today six or more examples of success where the hipothesis of modifiing the Cumulus clouds was conclusively demonstrated: they can indeed be modified* ........ *Many of us recognize that experiments were made based upon inappropriate foundations which need to be reviewed and strengthened* ...... *The major difficulty faced during the modifications of the Cumulus is the huge fluctuation of all the variables. While the factors of a natural precipitation vary from 10 to 10.000, the best results achived in the clouds seeding made by man do not exceed a factor near 3* .... *another problem that causes the experiments inconclusive or negative result is that we do not adjust to the real situation of the cloud and also due to the questionable target of the seeded materials...... We need now to spent time, efforts, money and the best scientific talents available in order to solve the fundamental remaining problens related to the convective clouds, to the controlled modification becomes true".*

Experiments confirm the possibility to provoke rain precipitation from Cumulus clouds. It was necessary to find the technology and the operational process that would enable a human control over the rain precipitation. This process is the subject matter of the present invention patent.

As an engineer and expert in droplets, its production, handling modification and characteristics, having dedicated three decades to this subject matter, its design and manufacturing of spraying equipments in general, the author has studied the convective clouds which are , essencially, huge amount of droplets. By developing during the 80s, the first sprayers with the technology of droplets of controlled size for agricultural aplications, the author observed a great advantage of this process when compared to the traditional ones because in aplications in scientific experiments in herbicides in soy, the water consumption was twenty five times lower and the herbicides consumption was eight times lower, with better results in herbes control.

On the other hand, spraying cloud with water applying the traditional spray nozles the results was always positive and foreseable: It was always possible to provoke rain precipitation The only deficiency with these process was related to economic rather than to technical reasons: the excessive consumption of water and the weigth of the water to be transported in airplanes. By means of development and adaptation of the controlled size droplets technology to the best practices of application of these drops aiming at achieving a major efficiency of collision and coalescence, there are great possibilities of a dramatic reduction of the volumes of water applied in this processs, which is the subject of this patent application. After the calibration of the system, it is possible to achive levels of 30 to 80 cubic meters of rainwater per liter of srayed water calculated by mathematical procedures of droplets engineering. This eliminates in a practical and original way, the only existing impediment for turning this process into an operationally and economically viable solution.

The **"Process and equipment to unleash rain precipitation from convective clouds of Cumulus type spraying water droplets of controlled size",** which is the subject of this invention patent comes to solve this problem, providing an easy, efficient and cost effective production of rains controlled by man. These rains can be unleashed over places where they are effectively needed, from the integral precipitation of the existing convective clouds wich, otherwise would not precipitate into rains or would precipitate only partially and scartered. Description of the characteristics of an innovative process, wich justifies this **invention** patent application.

The following is a description, with necessary technical details, of the relevant steps for the formation of the droplets of the clouds, its growth and the mechanism of natural, complete and incomplete rain precipitation in the convective clouds and the way the clouds are dissipated when they do not precipitate into rains. This description is based upon the classical works of the physics of clouds, mainly: R.R.Rogers and H.R.Pruppacher University of California, amended with conclusion by the author. The details and technical mecanisms of the process that the subject of the present invention are described bellow. Also, there is a comparison of the different approaches for the solution of the problem: the process we have created and the published scientific experiments, with an exposition of the technical reasons for the innovation and the success.

For a better understanding of the applied technology, we use texts, charts, technical drawings and photos of the works. We also use figures with details of the clouds, process schemes and schemes for the construction of the equipment of this patent application. The values presented are either average or typical values adopted by standard literature of the physics of clouds. The equipment constructive ways shown in the figures are merely for illustration, in order to demonstrate one of the possible mechanical solutions that can be used to achive the original goals of the patent. Therefore, it should be understood that alternative ways of construction with modifications in the mechanical concepts that lead to the same practical result can be easily elaborated and that these changes cannot be considered as different process when compared to this process created and filed in the invention patent herein.

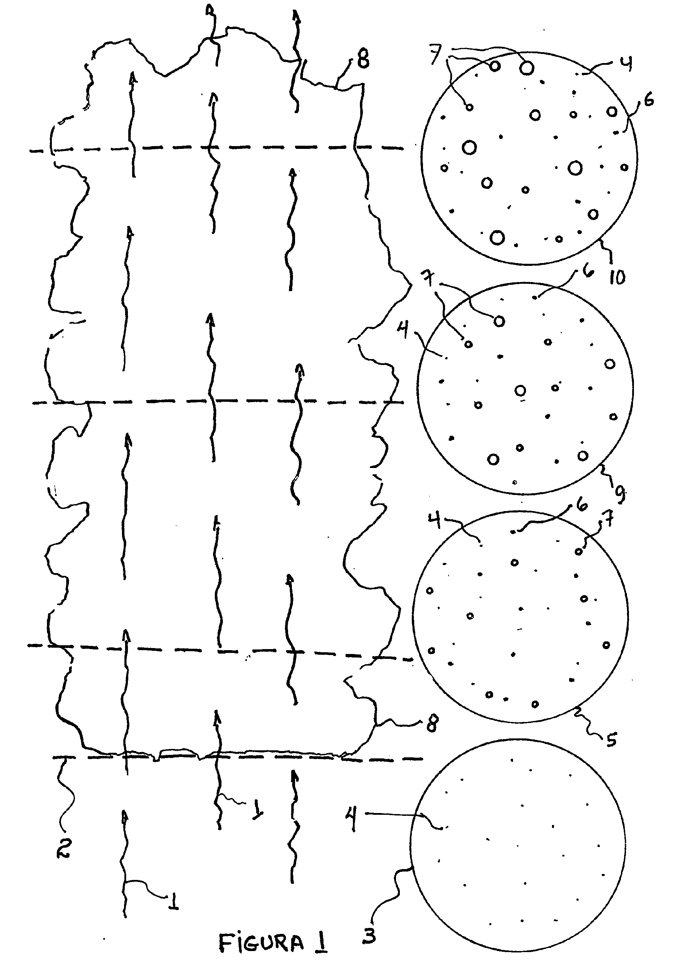

Figure 1 shows a schematic view of a growing convective cloud, with enlarged details showing condensation nuclei, critical size droplets just newly created and growing droplets of the cloud.

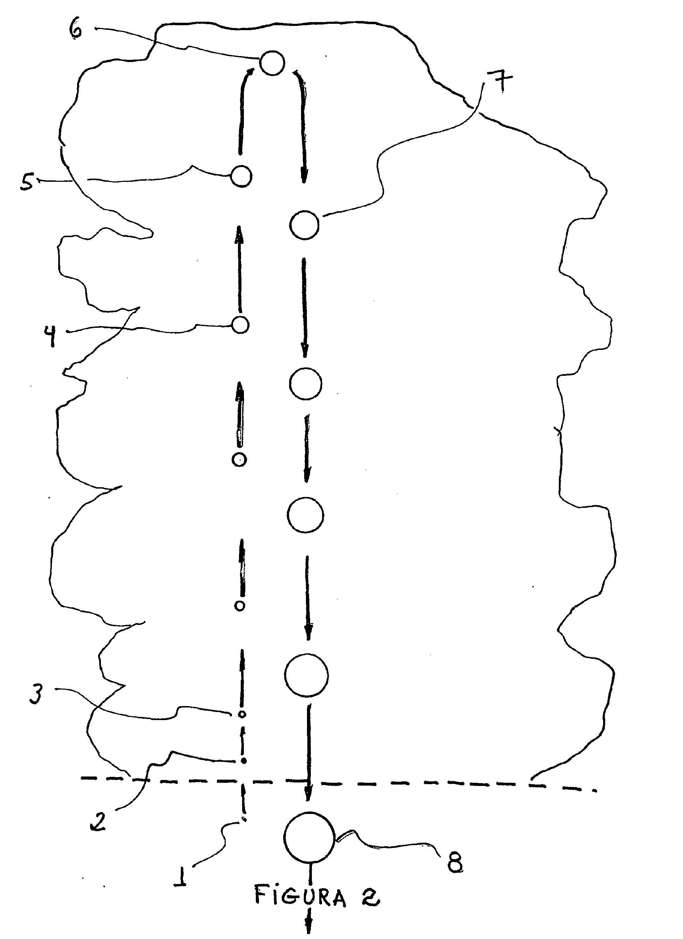

Figure 2 shows a schematic view of a convective cloud, the end of a growing process and the beginning of the natural precipitation phase.

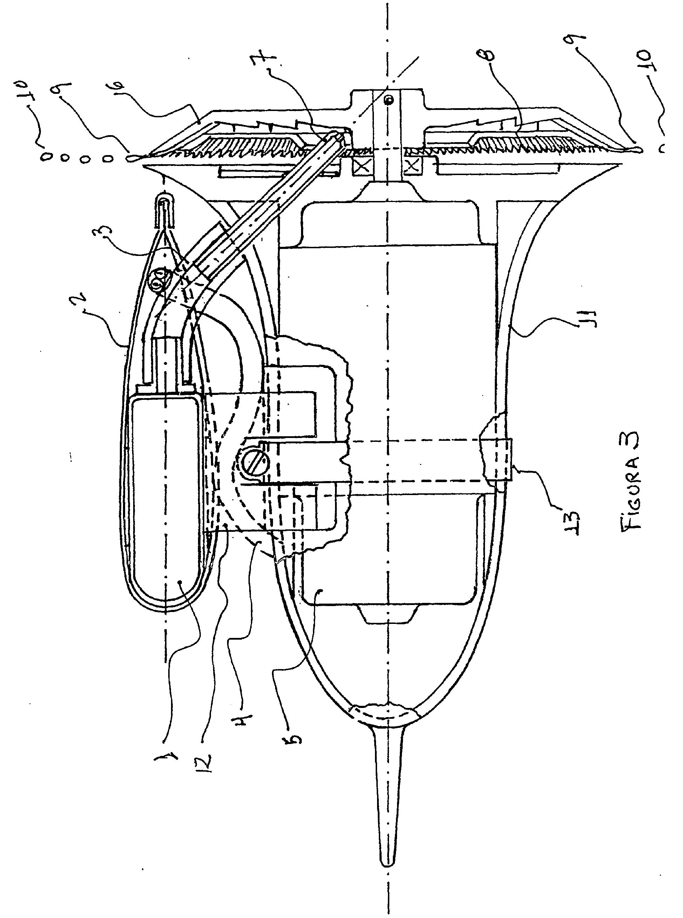

Figure 3 shows a cross section view of the spraying equipment which produces the water droplets with controlled size, by means of a rotative disc with asymetric gutters inside and droplets formation teeth, powered by an electric motor with the seed eletronically controled, and its wing profile rod for feeding water, electrical power and the suport of the equipment at the wing of the airplane.

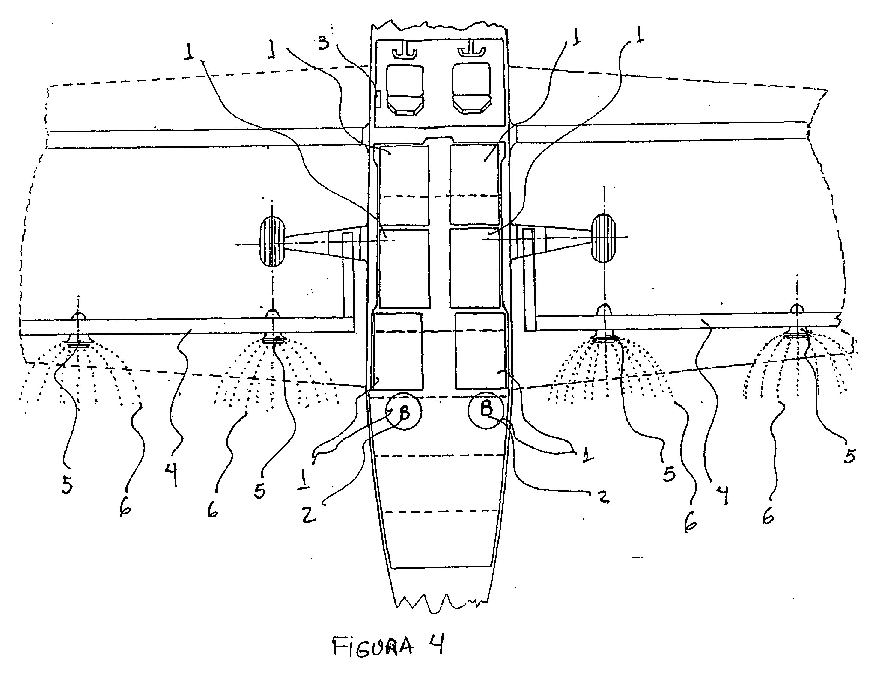

Figure 4 shows a schematic view of the complete system mounted in an airplane.

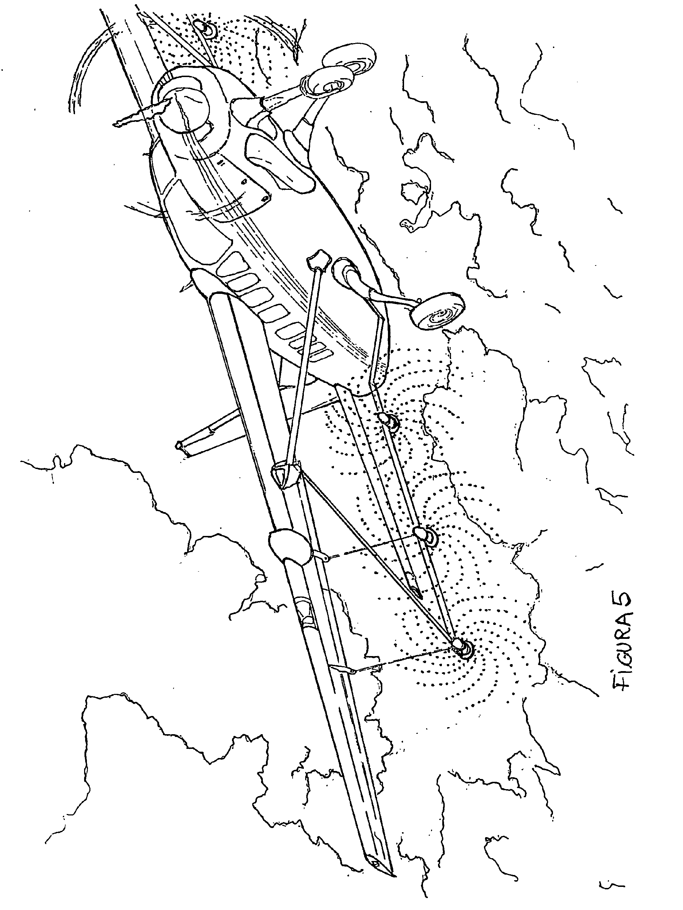

Figure 5 shows an illustrated view of the air spraying operation, inside the clouds with water droplets of controlled size.

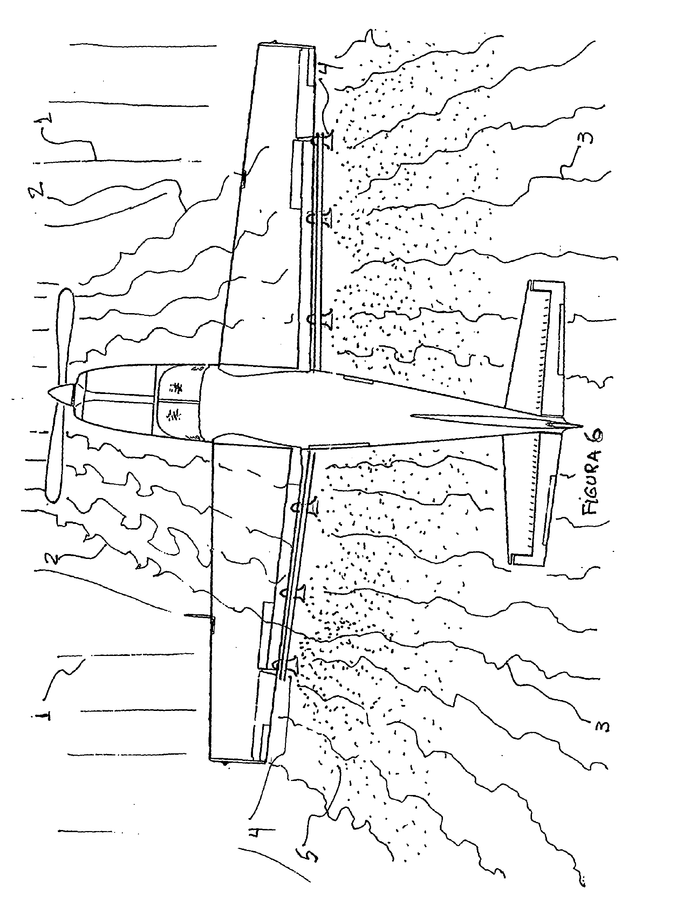

Figure 6 shows a schematic view of the airplane, the holes used to increase the turbulence and provide more productivity in the spraying operation.

The convective clouds are formed by the upstream currents of moist air. When this air goes up, these currents start to get colder until they reach the humudity saturation point. At this point, the first phase of the concective cloud formation begins: the initial formation of droplets named critical size droplets.

There is a huge amount of particles or aerosols, of micro or submicro size in suspention on the air around the region where the clouds are formed. These particles or aerosols turn into centers of water vapor condensation, wich for the initial droplets over the particles, named condensation nuclei which can be hygroscopic, neutral or hydrofobic; and depends also on the amount of available aerosols and on the water vapor saturation. During this phase, the critical size of these droplets vary from 1 to 10 microns. The droplets formed on hygroscopic nuclei such as salt, have the tendency to become bigger than those ones formed on neutral nuclei such as silica and burning ashes. Soluble hygroscopic nuclei such as salt become moist whwn 98% moist, before the air saturation. The neutral nuclei need saturation of 101,5% or more in order to begin the droplets formation. The hydrofobic nuclei usually produce droplets only aftter the existing hygroscopic and neutral nuclei are turned into droplets.

The oceanic clouds, which are formed mainly by salt nuclei usually have big critical size droplets, but in small quantity per volume of cloud (typical values are 10 to 30 droplets per cm3). The continental clouds, which contain a majority of neutral particles in large amounts, resulting from burning and dust, tend to produce much smaller critical size drops, but in bigger quantities (typical values are 200 to 600 droplets per cm3). This difference in the amount and size of the droplets between the oceanics clouds brought by the winds and the continental clouds locally formed has a direct impact over the rain precipitation mechanism as it will be seen later.

The second phase is the growing of the just created critical size droplets, by means of diffusion of the saturated air vapor molecules over the surface of these droplets. During this phase, the droplets grow from the initial critical size to become a typical cloud droplet. This growing occurs by diffusion of the air saturated water vapor molecules to the surface of the just created droplets. During this phase, the growing is simultaneous in all the population of particles in such a way that their diameter become essentially equalized closing this way the spectrum of droplets: for example, two droplets created from different condensation nuclei having critical size of 1 micron (neutral nuclei) and 10 micron (hygroscopic nuclei), after the same exposition time lapse during the growing by diffusion reach diameters of 10 microns and 14 micron respectively. With upward air and its cooling more air humidity saturation ocurs, forming new droplets over new connensation nuclei in suspention in the air, which causes the continuous growing by diffusion of the droplets previosly formed. According to it, the amount of water per cubic meter of clouds tend to get bigger from the base to the top: at the height of 1,0 km typical values are 0,5 g of water per m3 of cloud. At the height of 2.0 km the typical value is 1.0 g/m3 and at the height of 3,0 km there is 1,5 q/m3. These values do not change meaningfully between oceanic and continental clouds, despite of the difference between the amount and size of the droplets.

Figure (1) shows a profile of a Cumulus cloud in vertical growing due to the upward current of moist air (1).The line (2) indicates the base of the cloud where the air saturation begins. The enlarged detail (3) shows the presence of aerosols or particles of micronic and sub micronic level (4) floating in the air at the base of the cloud. The enlarged detail (5) shows the critical size droplets (6) just created, the cloud droplets at the phase of growing by diffusion (7) wose size range from 10 to 15 micron and that grow up to 200 meters aproximately from the base (2) of the cloud (8). The enlarged detail (9) shows the presence of aerosol (4) at height of 600m from the base (2) of the cloud (8) and also critical size droplets (6) and cloud droplets (7) getting bigger, with their sizes now ranging from 10 to 25 microns. The enlarged detail (10), at the height of 1.200 m from the base (2) , shows the same critical size droplets (6) with the cloud droplets (7) growing from 10 to 30 microns indicating the presence of the first 36 microns droplets.

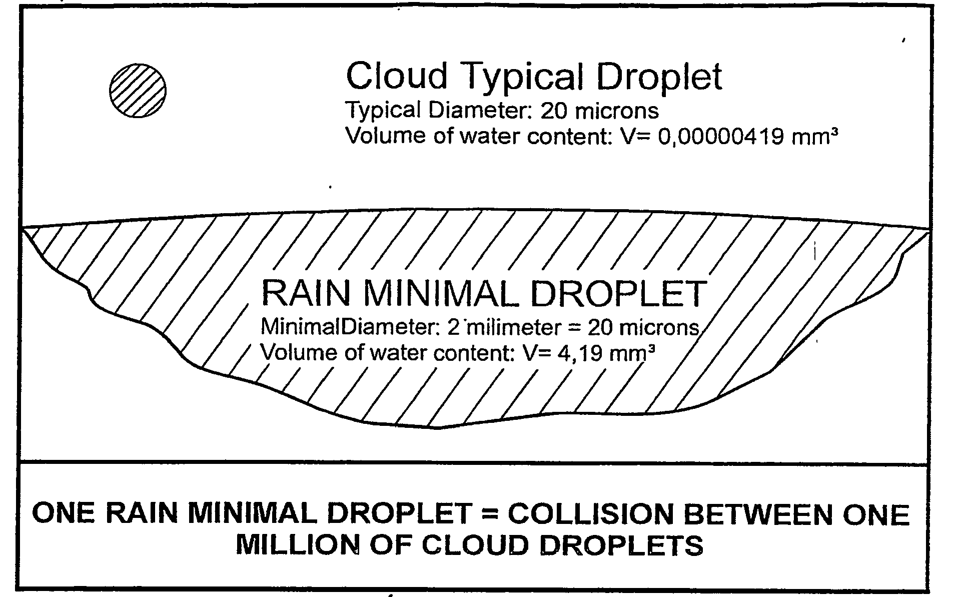

The chart above enables the visualization of the nature of task of turning cloud droplets already formed into raindrops. Raindrops of 3 mm in size need to gather water contained in approximately 3 million of typical cloud droplets.

The third phase of the droplets growing is known as growing by coliision and coalescence (adhering) . In order to start this phase, when droplets grow colliding and sliding, it is mandatory that at least some of the droplets become bigger and have surpassed the minimum theoretical diameter limit of 36 micron. Bellow these values the mass of droplets, their speed at free fall and the high superficial tension due to the small curvature radii and also the air resistance of the air layer wich wraps each droplet impend the collsision and coalescence between the cloud droplets (the only process which can unleash the rainfall). The bigger droplet is then called **Collector Droplet.**

Figure (2) schematically shows all the process, since the formation of the cloud droplet from the condensation nuclei (1), where the saturated vapor gets condensed and forms the droplet of minimal size (2), which goes upward and then starts the growing by diffusion of vapor molecules over its surface forming a cloud droplet (3). This one goes upward too and grows by diffusion until it reaches the point (4) where its diameter is 36 micron. The growing by diffusion then continues from this size and the growing by collision upward beguins at this point. The droplet (5) goes upward taken by the upstream, but other cloud droplets with smaller diameter go upward faster, causing collisions as the backyard. These collisions result in the growing of the droplets, decreasing thus its speed until they stop at the point (6) where the free fall speed is equal to the speed of the upstream current. Smaller cloud droplets continue to go upstream and colliding. This causes the droplet to become heavier and in (7) it starts to go downward colliding against the thousands of droplets and it keeps growing until it reaches the botton of the cloud as a raindrop (8). When the bigger droplet is 36 to 40micron, the values of the collision efficiency (n), remain very low (0,5% to 2,3%), therefore, the possibility to unleash rain is very low. In order to form bigger droplets it is necessary stronger upstream currents and high air volume to form higher clouds with bigger diameter.

**Collision Efficiency (µ)**

| **Collector Droplets** | **Cloud Droplet** | | | | |
|---|---|---|---|---|---|
| | 10µ | 15µ | 20µ | 30µ | 40µ |
| 36 µ | 0,005 | 0,01 | 0,012 | 0,07 | - |
| 40µ | 0,006 | 0,015 | 0,023 | 0,026 | 0,005 |
| 50 µ | 0,009 | 0,026 | 0,054 | 0,13 | 0,006 |
| 60 µ | 0,013 | 0,058 | 0,17 | 0,48 | 0,54 |
| 70 µ | 0,026 | 0,15 | 0,32 | 0,56 | 0,61 |
| 80 µ | 0,18 | 0,36 | 0,45 | 0,60 | 0,65 |
| 100 µ | 0,19 | 0,40 | 0,50 | 0,66 | 0,72 |
| 150 µ | 0,26 | 0,50 | 0,62 | 0,78 | 0,88 |
| 200µ | 0,30 | 0,58 | 0,69 | 0,82 | 0,88 |
| 500 µ | 0,58 | 0,72 | 0,80 | 0,91 | 0,93 |
| 1000µ | 0,61 | 0,82 | 0,88 | 0,93 | 0,98 |

**Droplet size Fall speed**

| µ | m/s |
|---|---|
| 20 µ | 0,01 |
| 40 µ | 0,05 |
| 80 µ | 0,19 |
| 100 µ | 0,27 |
| 200 µ | 0,72 |
| 500 µ | 2,06 |
| 1.000 µ | 4,03 |
| 2.000 µ | 6,49 |

The continental clouds wich have more smaller droplets need higher heights in order to form drops using growing by diffusion wich are bigger than 40 microns in size in order to unleash rains.

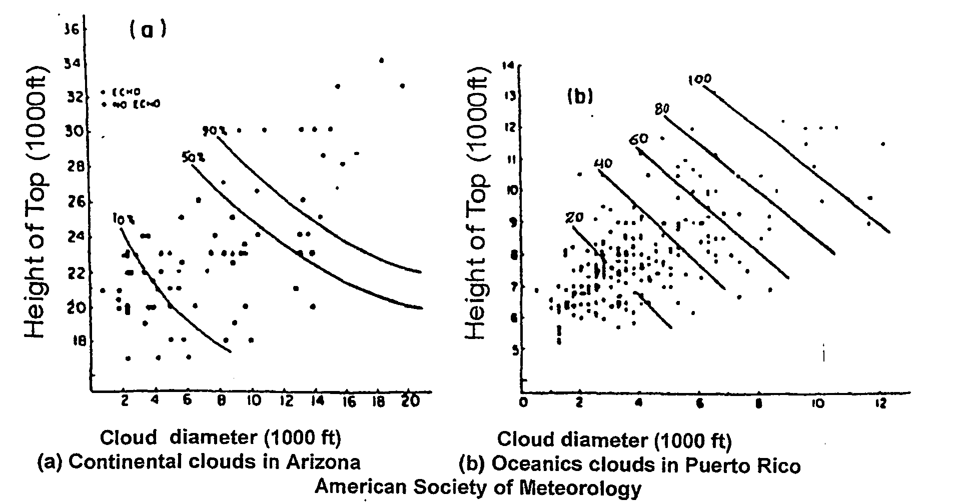

The charts above shows the ocurrence and non-ocurrence of rain precipitation in Cumulus clouds as a funtion of the maximum height and the diameter of the cloud: (a) Arizona Continental Clods and (b) Puerto Rico Oceanic Cloud. These charts demonstrate the small percentage of clouds that precipitate into rains.

Kampe and Weikmann (1957) demonstrated that oceanic cumulus clouds need heigths greater than 2,5 km from botton to top to achive a rain probability of 20%. Continental Cumulus clouds nees heights greater than 6 km in order to achieve the same possibility of rain preciipitation. The possibility of the convective clouds surpass these heights during the seasons of weaker upstream currents (winter) explain the daily presence of clouds without rain precipitation.

The natural tendency of growing of droplets by difusion is the homogeneous and stable growing of all the droplets. The rain precipitation occuurs only when some if the droplets achieve bigger diameters in order to initiate the destabilization of the cloud and its precipitation into rain. This de-stabilization may occur naturally by sufficient height of the top of the cloud, when the growing by diffusion causes some of xpthe droplets to reach the top of the cloud with diameters ranging 40 to 50 microns or more. In this case, a great amount of collecting droplets is formed, causing the intrgral precipitation of the cloud into rain.

The growing of a reasonable amount of droplets may occour even if the cloud does not reach the necessary height. The growing of droplets is caused, among other factors, by the combination of lateral and upstream winds and turbulence, causing incomplete and sparse rains.

The detail (a) of the Figure below shows light, low terminal free fall speed droplets of 20 micron, having the air pelicule wrapping the surface and also a hight superficial tension caused by the small diameter. This causes a lateral sliding between the droplets preventing the collision during this phase.

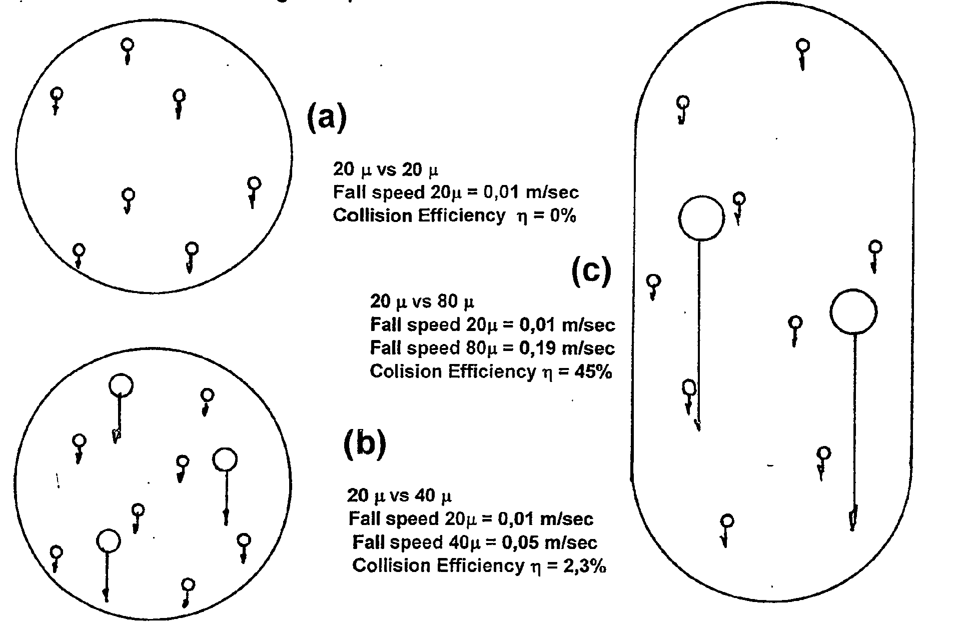

The detail (b) of the Figure (11) shows droplets of 40 micron falling at 0,5 m/s speed that have the possibility of collision and adherence withy smaller droplets of 10 to 20 microns with collision efficiency from 0,5% to 2,6%. The detail (c) of Figure (11) shows droplets of 80 micron in freefall at speeds 20 times higher causing collecting by collision effeiency of 45% (ranging from 18% to 60% for droplets of 10 to 30 microns).

It is demonstrated that the process of growing by collision and coalescence becomes efficient when the bigger droplet sizes are 60, 70, 80 micron or more. In this case, the colission efficiency to collide againt droplets of 20 micron raises susbtantially to 17%, 32%, 45% or more. These droplets are essentiallyy bigger and heavier and have faster free fall speeds, with trajectories that can seldon deviate through the superficial air layer that wraps the droplet. Due to this fact, these droplets are called collector droplets: its functionis to go downward in free fall with greater weight and speeds, causing thus millions of collisions with the cloud droplets and then to adhere to the cloud droplets that slide over these collector droplets resulting then in rain precipitation. The complete or incomplete conversion of these clouds into rain depends essentially on the amount of the available collector droplets, since each collector droplet turns into raindrop by collision or adherence.

The convective clouds grow up with the upstream currents of air caused by the incidence of sunrays over the earth surface. Usually at sunset these upsttream air current cease or even revert the direction, becoming downstream They then absorb the water from the droplets that start to vaporize and the clouds start to dissipate. The average life of convectiiive clouds that grow dailyby upstream currents is 5 to 10 hours. Therefore, there is a low possibilityof forming greater droplets (collector droplets) in Cumulus clouds before they dissipate. When the wind takes them to other regions, forming greater blocks named cloud "fronts" that usually cover the sky, preventing the sun rays to reach the eath susface (decreasing thus the up and downstream currents), the life of these cloud fronts tend to become longer (without relevant growing or diddipation) for some days.

One of main known scientific experiments tried was to seed hygroscopic condensation nuclei in slid form of powder and also of vapor aiming to form droplets of bigger minimun sizes. It was also tried to seed droplets of salt saturated in water solutions (therefore, hygroscopic) which could have greater chance to grow with more efficiency during the diffusion phase to form bigger drops which would cause rain precipitation.

The process that is subject of this patent application, spray controlled size collector water droplets inside of the clouds. These droplets are already produced at the correct diameter so that they begin, during its fall, the collecting of the existing droplets inside the cloud by collision and adherence.

The variables that cause difficulties to these experiments become secondary in this process. During the application, it is not dependent on the condensation over the higroscopic nuclei, diffusion of molecoles of saturatedvapor over the droplet surfaces, the upstream or downstream currents. It also does not depend whether the clouds are continental or oceanic. It is just necessary to have clouds with droplets to be collected, thus reducing the huge number of variables that may affect the process.

Figure (3) shows a cross-section view of the sprayer equipment of controlled droplet size. The integral system is mounted on a semi-oblong tube (1) to conduct water. This tube is coated with a plate (2) in an airfoil shape. The water feeding to the sprayer nozle is made by the injector tube (7) and through a hose (3). There is an electrical cable (4) at the rear side of the airfoil. This cable is used to activate the electrical motor (5) that causes the toothed disc (6) rotation. This rotation speed is electronically controlled and causes the production of the controlled size droplets (10). These droplets are produced by the centrifugal force which sends the water through the assimetric teeth (8) in order to produce drops as demonstrated in (9) an instant of time before the droplet is thrown in the space. The rotary nozles set is mounted is mounted on the winged bar (1) and (2) by means of the spacing plate (12) and the blacket (13).

Figure (4) shows the whole system mounted on an airplane, where the connected tanks (1) deliver water to be sprayed to the electrical pump (2) and then fed to the rotary nozles (5) through the winged support tube (4). The system is commanded by the pilot through the electrical command (3) which activates the rotary nozles (5) and the motor pump (2). The command (3) contains an electronic rotational controller of the rotary nozles motor (5), in order to produce the droplets (6) at the desired size by varying the rotation of the motors.

Figure (5) shows in perspectice the operation of cloud spraying with droplets of controlled size.

Figure (6) shows the cases where the collision efficiency is still low (17% with 60 micron) The capabilities of the tecnology of application of droplet spraying may increase its efficiency with the airplane spraying in high air turbulence regime (3) caused by the propeller rotation and the low flying speed of the airplane with the flaps open (if possible) causing a meaningful increase of the paths of the droplets in a randon pattern. This causes the increase of its collision efficiency against the droplet of the cloud at initial phase, since after the first hundreds of collisions, these collector drops will increase fast, resulting in an increase of the collision efficiency.

The thecnical photos show the differences between the conventional spraying systens and the systen of drops of controlled size. In the conventional systems,the droplets are broken into randon sizes thus producing a wide spectrum of droplets. In the example (a) and (b) of the pictures, 80% of the produced droplets are too small (10 to 30 microns), but their water consuption is just about 10%. Less than 10% of the droplets are produced at the ideal size of 60 to 80 microns, consuming 6% of the water. The remaining droplets, 10% aproximately, are too big and tey consune all the remaining water. Because they are bigger, they waste a huge volume of water.

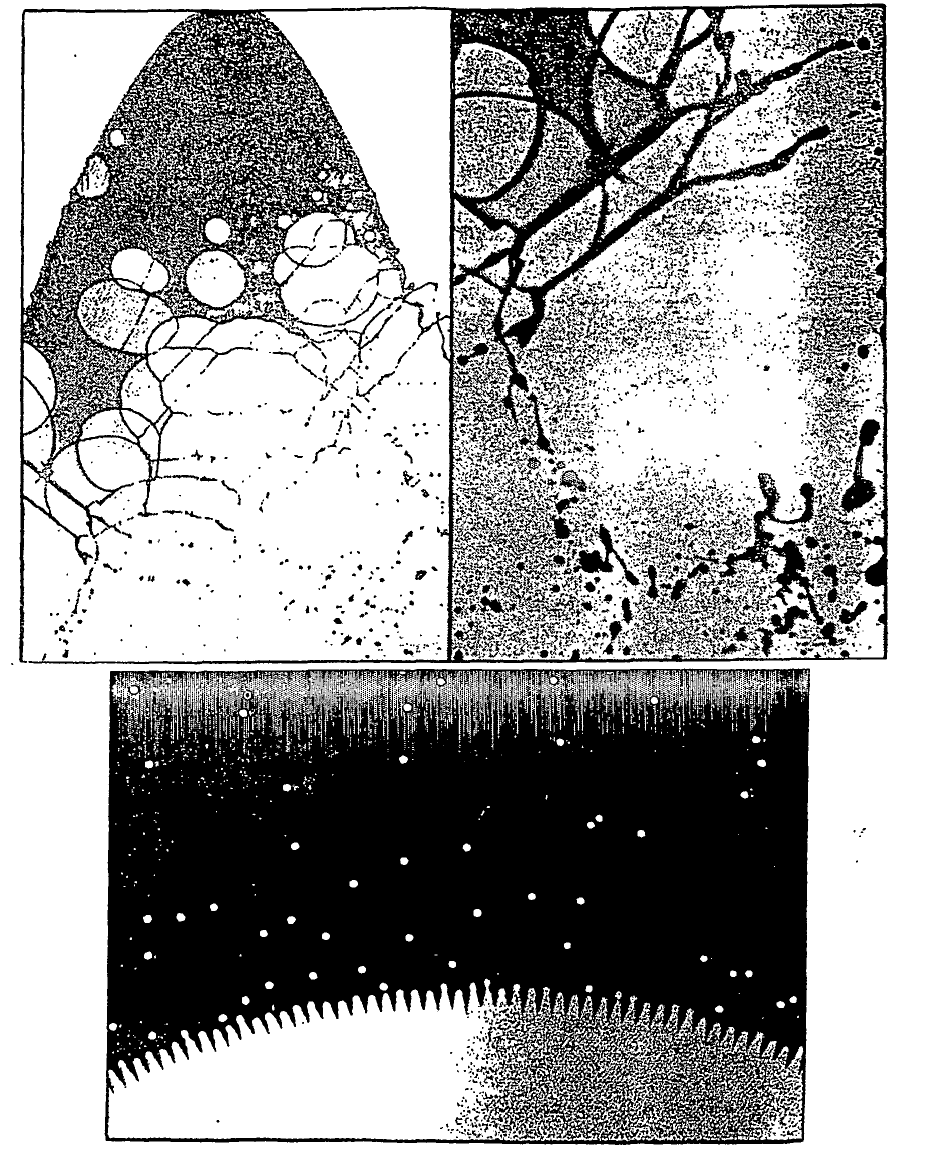

With the colector droplets of controlled size, 100% of thw water is turned into droplets of ideal size, optimizing the use of the sprayed water. By means of the electronic variation of the nozle motor rotation, the size of the droplets can be easily changed. One liter of water can produce 8 billions of collecting droplets of 60 micron in diameter. When they are applied at a rate of 50 collector droplets per square centimeters, for example, it will be necessary 28 liters of water to aplly these droplets over a one sq. Kilometers or cloud area. If the cloud heigh is 2 or 3 km heigh, with typical values from 0,5 to 1,5 gr of water per cubic meter of cloud at the first and third kilometer, there will be approximatelly 30 to 80 cubic meters of water for rain, with a sure margin of 60%.

The spraying tecnology made efforts during the 70s and 80s to produce small droplets (10 to 40 microns) for many applications, such as engines burning with injection nozles, electrostatic painting, sprays in aerossols and other industrial applications. This tecnology was available and was largely used by scientists in the research of Cumulus clouds modification experiments appliing salt water solutions and other solutions in order to modify the clouds. In order to spray bigger volumes of water, the available tecnology the available tecnology was known as conventional spraying nozles of middle and high volume that were used in tests to spray clouds and demonstrated to br functional, but not worthy in term of costs due to the waste of water according to the reasons above explained. Therefore, the idea of spraying water in a cost effective manner was neglected for many years.

## Claims

1. Equipment to unleash rain precipitation from convective clouds of Cumulus type, consisting of a set of equipment mounted on an airplane; said equipment being **characterized in that** it comprises water tanks, electrical pumps, rotative spraying nozzles, controlled by a command box and that produce collector water droplets of controlled size which are sprayed inside convective clouds, causing their precipitation into rain,
the sprayer mechanism consists of an electrical motor with the rotational speed that is electronically controlled and which drives the rotation of a spraying disc which contains asymmetric grooves that conduct the water furnished by the support bar through the hose and the injector tube in order to produce droplets of controlled size formed at the end of asymmetric tubes, and that are formed by centrifugal force forming drops which are thrown into space with homogeneous and controlled size, according to the motor rotation.

2. Process to unleash rain precipitation from convective clouds of Cumulus type, by using the equipment of the preceding claim **characterized in that** it provides to: spraying water droplets of controlled size by applying water under the form of collector droplets of controlled size that are produced in diameter ranging from 40 micron to 1000 micron so they can collect efficiently during the fall, the cloud droplets by collision and coalescence and then grow and turn into raindrops.

3. Process according to claim 2 **characterized by** using water free of salt solution, silver iodine or any other hygroscopic addictive or condensation nuclei makers in form of powder, vapour or saturated solutions in water.

## Patentansprüche

1. Einrichtung zum Auslösen von regenförmigem Niederschlag aus Konvektionswolken der Kumulus-Art, bestehend aus einer Gruppe von an einem Flugzeug angebrachten Geräten; wobei die Einrichtung **dadurch gekennzeichnet ist, dass** sie Wasserbehälter, Elektropumpen und sich drehende Sprühdüsen umfasst, die von einer Befehlszelle gesteuert werden und Sammelwassertröpfchen gesteuerter Größe erzeugen, die in Konvektionswolken eingesprüht werden, was zu deren Abscheidung als Regen führt, der Sprühmechanismus aus einem Elektromotor mit einer Drehzahl besteht, die elektronisch gesteuert wird und die Umdrehungen einer Sprühscheibe steuert, die asymmetrische Rillen enthält, welche das von einer Tragstange gelieferte Wasser durch einen Schlauch und ein Einspritzrohr hindurch leiten, um Tröpfchen gesteuerter Größe zu erzeugen, die am Ende von asymmetrischen Rohren gebildet werden und durch eine Tropfen bildende Zentrifugalkraft entstehen und mit homogener und gesteuerter Größe gemäß den Umdrehungen des Motors in den Raum geschleudert werden.

2. Verfahren zum Auslösen von regenförmigem Niederschlag aus Konvektionswolken der Kumulus-Art mit Hilfe der Einrichtung gemäß dem vorhergehenden Niederschlag, **dadurch gekennzeichnet, dass** dieses das Versprühen von Wassertröpfchen gesteuerter Größe durch Aufbringen von Wasser in Form von Sammeltröpfchen gesteuerter Größe vorsieht, die in einem Durchmesserbereich von 40 Mikrometern bis 1000 Mikrometern erzeugt werden, so dass sie sich während des Fallens effektiv sammeln können, wobei die Tröpfchen der Wolke durch Zusammenstoßen und Verschmelzen entstehen und dann größer werden und sich in Regentropfen verwandeln.

3. Verfahren nach Anspruch 2, **gekennzeichnet durch** Verwendung von Wasser, das frei von Salzlösung, Silber, Jod oder jedem anderen hygroskopischen Zusatzstoff oder von Kondensationskeimbildnern in Form von Pulver, Dampf oder gesättigten Lösungen in Wasser ist.

## Revendications

1. Equipement pour provoquer une précipitation sous forme de pluie à partir de nuages de convexion du type cumulus, consistant en un ensemble d'équipements montés sur un aéronef ; ledit équipement étant **caractérisé en ce qu'**il comprend des réservoirs d'eau, des pompes électriques, des buses d'aspersion rotatives, contrôlés par un boîtier de commande et produisant des gouttelettes d'eau de taille contrôlée à partir d'un orifice récepteur qui sont pulvérisées à l'intérieur de nuages de convexion, causant leur précipitation sous forme de pluie, le mécanisme de pulvérisation consistant en un moteur électrique dont la vitesse de rotation est commandée électroniquement et qui entraîne la rotation d'un disque de pulvérisation qui contient des sillons asymétriques qui conduisent l'eau fournie par la barre de support à travers le tuyau et le tube injecteur pour produire des gouttelettes de taille contrôlée formées à l'extrémité des tubes asymétriques, et qui sont formées par la force centrifuge en gouttes qui sont lancées dans l'espace avec une taille homogène et contrôlée, selon la rotation du moteur.

2. Procédé pour provoquer une précipitation de pluie à partir de nuages de convexion de type cumulus, par utilisation de l'équipement de la revendication précédente, **caractérisé en ce qu'**il consiste à pulvériser des gouttelettes d'eau de taille contrôlée en appliquant de l'eau sous forme de gouttelettes d'orifice récepteur de taille contrôlée qui sont produites dans un diamètre allant de 40 microns à 1000 microns de sorte qu'elles peuvent collecter efficacement pendant leur chute, les gouttelettes de nuages par collision et coalescence puis croître et se transformer en gouttes de pluies.

3. Procédé selon la revendication 2, **caractérisé en ce qu'**on utilise une eau exempte de solution saline, d'iodure d'argent ou de tout autre additif hygroscopique ou générateur de germes de condensation sous forme de poudre, de vapeur ou de solution saturée dans l'eau.
